# EUROPÄISCHE PATENTANMELDUNG

(11) **EP 3 961 266 A2**
(43) Veröffentlichungstag der Anmeldung: **02.03.2022**
(21) Anmeldenummer: 21181050.2
(22) Anmeldetag: 23.06.2021
(51) Int. Cl.: G01S 19/46, G01S 19/25

(54) **LANDWIRTSCHAFTLICHE MASCHINE**

(30) Priorität: 26.08.2020 DE 102020122358
(71) Anmelder: CLAAS Tractor S.A.S., 78141 Vélizy-Villacoublay Cedex (FR)
(72) Erfinder: Gobin, Benoit, 71530 Fragnes (FR)
(74) Vertreter: CLAAS Gruppe

(57) **Zusammenfassung**

Eine landwirtschaftliche Maschine weist eine Positionsbestimmungsvorrichtung auf, die einen Empfänger für Satellitennavigationssignale, einen ersten Mobilfunkempfänger (6) zum Empfangen einer Korrekturinformation über ein zellulares Mobilfunknetz und Ableiten eines ersten Ausgangsdatenstroms aus der Korrekturinformation, eine Auswerteeinheit (7) zum Errechnen der Position der Maschine anhand der Satellitennavigationssignale und eines Eingangsdatenstroms, einen zweiten Mobilfunkempfänger (12) zum Empfangen der Korrekturinformation über ein zellulares Mobilfunknetz und Ableiten eines zweiten Ausgangsdatenstroms aus der Korrekturinformation und eine Steuereinheit (11) umfasst, die eingerichtet ist, um anhand von Ausgaben der Mobilfunkempfänger einen der Ausgangsdatenströme auszuwählen und als Eingangsdatenstrom an die Auswerteeinheit (7) weiterzugeben.

## Beschreibung

Die vorliegende Erfindung betrifft eine landwirtschaftliche Maschine wie etwa einen Traktor, einen Mähdrescher, einen Feldhäcksler o.dgl. mit einer Vorrichtung zur Positionsbestimmung, insbesondere für autonomes Navigieren dieser Maschinen.

Positionsbestimmung mit Hilfe von Satellitennavigationssignalen, etwa von Satelliten des GPS- oder Galileo-Systems, ist allgemein bekannt. Die Ortungsgenauigkeit, die allein gestützt auf diese Signale erreichbar ist, ist je nach Zahl und Position der Satelliten, von denen gleichzeitig Signale empfangen werden können, variabel, und ist mit einigen 10 cm für Anwendungen wie etwa autonomes Fahren von landwirtschaftlichen Maschinen auf einem Feld nicht ausreichend. Eine bekannte Technik zur Verbesserung der Genauigkeit ist das RTK-(Real-Time-Kinematic-) Verfahren, bei der ergänzend zu den Satellitensignalen ein sogenanntes RTK-Signal von einer stationären Bodenstation zur Verfügung gestellt wird. Dessen Auswertung basiert auf einer Phasenmessung, d.h. während das Ergebnis einer Auswertung der Satellitennavigationssignale eine zusammenhängende Region auf der Erdoberfläche ist, innerhalb derer sich die landwirtschaftliche Maschine mit hoher Wahrscheinlichkeit befindet, schränkt die zusätzliche Auswertung des RTK-Signals die möglichen Aufenthaltsorte der Maschine auf eine Mehrzahl von kleinen, nicht untereinander verbundenen Teilbereichen dieser Region ein. Damit das Auswertungsergebnis für die Navigation nutzbar wird, muss unter den mehreren Teilbereichen derjenige ermittelt werden, in dem sich die Maschine tatsächlich befindet. Wenn die Maschine sich bewegt, dann ändern sich auch die Teilbereiche, die als Aufenthaltsort der Maschine in Betracht kommen, aber nur bei wenigen dieser Teilbereiche sind diese Änderungen mit der Annahme vereinbar, dass sich Geschwindigkeit und Richtung der Bewegung der Maschine nur langsam und gleichmäßig ändern.

Aus EP 2 529 250 B1 ist eine Vorrichtung zur Positionsbestimmung bekannt, bei dem sogenannte RTK Engines verwendet werden, um anhand aktueller und historischer RTK-Signale die Mehrdeutigkeit aufzuheben und unter den mehreren in Frage kommenden Teilbereichen einen als den vermuteten Aufenthaltsort auszuwählen. Erweist sich dabei die von einer Haupt- RTK-Engine angebotene Lösung als fehlerhaft, dann wird eine Backup-RTK-Engine initialisiert, so dass sie beim Ermitteln des Teilbereichs, in dem sich die Maschine vermutlich befindet, nicht von früheren Messergebnissen beeinflusst werden kann, die zu den fehlerhaften Ergebnissen der Haupt- RTK-Engine geführt haben. In der Zeit, die verstreicht, bis die Backup-RTK-Engine genügend Messwerte gesammelt hat, um eine brauchbare Positionsbestimmung zu liefern, ist die Genauigkeit der Positionsbestimmung eingeschränkt.

Die mehreren RTK-Engines sind nicht geeignet, um eine exakte Positionsbestimmung aufrecht zu erhalten, wenn das von ihnen benötigte RTK-Signal ausfällt.

Zeitweilige Ausfälle des RTK-Signals können insbesondere dann auftreten, wenn sich infolge einer Bewegung der Maschine die Empfangsbedingungen für das RTK-Signal verändern, z.B. wenn die Maschine die Reichweite einer das RTK-Signal ausstrahlenden Bodenstation verlässt.

Um die Verfügbarkeit des RTK-Signals zu verbessern, wurde bereits vorgeschlagen, das RTK-Signal über ein herkömmliches kommerzielles zellulares Mobilfunknetz zu verbreiten. Auch hier kann es jedoch zu Signalausfällen kommen, da gerade auf landwirtschaftlichen Flächen fern von Siedlungen oft nur schwache Mobilfunksignale mit niedriger Datenrate zur Verfügung stehen. Zwar sollte hier an der Grenze zwischen zwei Mobilfunkzellen theoretisch ein Handover von einer Zelle zur nächsten ohne Übertragungsunterbrechung möglich sein, wenn sich die Signalstärken kontinuierlich ändern, in der Praxis können Abschattungen und Reflexionen des Funksignals aber auch fern von einer Zellengrenze zu einer zeitweiligen Nichtverfügbarkeit des RTK-Signals führen.

Aus EP 2 384 061 B1 ist ein Verfahren zum automatischen Auswählen einer SIM-Karte in einem Dualmodus-Endgerät bekannt, bei dem in einem Bereitschaftszustand des Endgeräts eine Umschaltung von einer ersten SIM-Karte auf eine zweite möglich ist, wenn in einem Mobilfunknetz, zu dem die erste SIM-Karte Zugang gewährt, die Signalqualität unzureichend ist. Es wäre zwar denkbar, in diesem Mobilfunknetz und dem der zweiten SIM-Karte das RTK-Signal zu verbreiten, doch wäre auch hier die Umschaltung von einem Netz zum anderen mit zeitweiliger Nichtverfügbarkeit des RTK-Signals verbunden, da das Endgerät erst aus einem aktiven Modus, in dem die Übertragung der RTK-Signals stattfindet, in den Bereitschaftszustand umschalten und nach Wechsel der SIM-Karte im neuen Netz eine Verbindung herstellen muss.

Eine Aufgabe der Erfindung ist, eine landwirtschaftliche Maschine zu schaffen, die eine präzise Positionsbestimmung mit hoher Verfügbarkeit ermöglicht.

Die Aufgabe wird gelöst, indem bei einer landwirtschaftlichen Maschine mit einer Positionsbestimmungsvorrichtung, die einen ersten Mobilfunkempfänger zum Liefern eines ersten Ausgangsdatenstroms und eine Auswerteeinheit zum Errechnen der Position der Maschine anhand eines Eingangsdatenstroms umfasst, die Positionsbestimmungsvorrichtung wenigstens einen zweiten Mobilfunkempfänger zum Liefern eines zweiten Ausgangsdatenstroms und eine Steuereinheit umfasst, die eingerichtet ist, um anhand von Ausgaben der Mobilfunkempfänger einen der Ausgangsdatenströme auszuwählen und als Eingangsdatenstrom an die Auswerteeinheit weiterzugeben. Durch diesen Aufbau ist es möglich, einen redundanten Ausgangsdatenstrom bereitzustellen, so dass in dem Fall, dass der aktuell genutzte Ausgangsdatenstrom gestört ist, eine unterbrechungsfreie Umschaltung auf den anderen Ausgangsdatenstrom stattfinden kann.

Die Positionsbestimmungsvorrichtung kann ferner einen Empfänger für Satellitennavigationssignale umfassen.

In diesem Fall ist vorzugsweise der erste Mobilfunkempfänger eingerichtet, eine Korrekturinformation über ein zellulares Mobilfunknetz zu empfangen und den ersten Ausgangsdatenstrom aus der Korrekturinformation abzuleiten, und der zweite Mobilfunkempfänger ist eingerichtet, die Korrekturinformation über ein zellulares Mobilfunknetz zu empfangen und den zweiten Ausgangsdatenstroms aus der Korrekturinformation abzuleiten.

Die Auswahl des Ausgangsdatenstroms kann völlig ohne Mitwirkung der Auswertungseinheit erfolgen.

Wenigstens einer der Mobilfunkempfänger, hier als zweiter Mobilfunkempfänger bezeichnet, kann ausgelegt sein, um selber das Vorhandensein seines Ausgangsdatenstroms oder die Qualität des Ausgangsdatenstroms zu beurteilen, und ein Steuersignal bereitzustellen, welches das Ergebnis der Beurteilung anzeigt. Dann kann sie Funktion der Steuereinheit sich darauf beschränken, analog zu einem Relais den zweiten Ausgangsdatenstrom, wenn in ausreichender Qualität vorliegend, als Eingangsdatenstrom auszuwählen, und im gegenteiligen Fall den ersten Ausgangsdatenstrom auszuwählen.

Alternativ kann die Steuereinheit selber eingerichtet sein, die Qualität oder das Vorliegen eines der Ausgangsdatenströme zu beurteilen und, wenn der eine Ausgangsdatenstrom als nicht vorliegend oder als von unzureichender Qualität beurteilt wird, den anderen Ausgangsdatenstrom als Eingangsdatenstrom an die Auswerteeinheit weiterzugeben.

Die Mobilfunkempfänger sollten jeweils mit einer eigenen SIM betreibbar sein. Indem ein Anwender SIMs von verschiedenen Netzbetreibern verwendet, kann er erreichen, dass die Mobilfunkempfänger die Korrekturinformation mit hoher Wahrscheinlichkeit von verschiedenen Basisstationen empfangen, und dass somit eine hohe Wahrscheinlichkeit besteht, dass wenn der Ausgangsdatenstrom des aktuell mit der Auswerteeinheit verbundenen Mobilfunkempfängers ausfällt, der andere Mobilfunkempfänger einen brauchbaren Ausgangsdatenstrom liefert.

Die Steuereinheit ist vorzugsweise eine Baueinheit mit wenigstens drei Steckverbindern, wobei wenigstens zwei baugleiche Steckverbinder zum Anschließen der wenigstens zwei Mobilfunkempfänger vorgesehen sind und ein weiterer, zu den wenigstens zwei Steckverbindern komplementärer Steckverbinder zum Anschließen an die Auswertungseinheit vorgesehen ist. Ein solcher Aufbau kann auf einfache Weise geschaffen werden, indem eine existierende Positionsbestimmungsvorrichtung mit einem Mobilfunkempfänger und einer Auswerteeinheit, die über entsprechende Streckverbinder verbunden sind, durch die Steuereinheit und wenigstens einen weiteren Mobilfunkempfänger aufgerüstet wird.

Ein Nachrüstsatz, der die Steuereinheit und den wenigstens einen Mobilfunkempfänger enthält, bildet daher ebenfalls einen Gegenstand der Erfindung.

Ein weiterer Gegenstand der Erfindung ist ein Verfahren zur Positionsbestimmung mit den Schritten:
- Verbinden eines ersten Mobilfunkempfängers mit einem zellularen Mobilfunknetz, um eine Korrekturinformation über das zellulare Mobilfunknetz zu empfangen und daraus einen ersten Ausgangsdatenstrom zu erzeugen;
- Verbinden eines zweiten Mobilfunkempfängers mit einem zellularen Mobilfunknetz, um eine Korrekturinformation über das zellulare Mobilfunknetz zu empfangen und daraus einen zweiten Ausgangsdatenstrom zu erzeugen;
- Empfangen von Satellitennavigationssignalen,
- Auswählen eines der Ausgangsdatenströme anhand wenigstens einer Ausgabe wenigstens eines der Mobilfunkempfänger (12) und
- Errechnen der Position anhand des ausgewählten Ausgangsdatenstroms und der empfangenen Satellitennavigationssignale.

Wenn jeder Mobilfunkempfänger mit einer eigenen SIM betreibbar ist, sollten zur Vorbereitung des Verfahrens SIMs ausgewählt werden, die Zugang zu verschiedenen Netzen gewähren.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Traktor als Beispiel einer erfindungsgemäß nachrüstbaren landwirtschaftlichen Maschine;
- Fig. 2: ein elementares Blockdiagramm der Positionsbestimmungsvorrichtung der Maschine;
- Fig. 3: ein detaillierteres Blockdiagramm der Positionsbestimmungsvorrichtung;
- Fig. 4: eine Anwendungssituation der erfindungsgemäßen Positionsbestimmungsvorrichtung; und
- Fig. 5: Ergebnisse eines Anwendungsversuchs der Positionsbestimmungsvorrichtung auf einer Feldfläche mit schlechter Mobilfunkabdeckung.

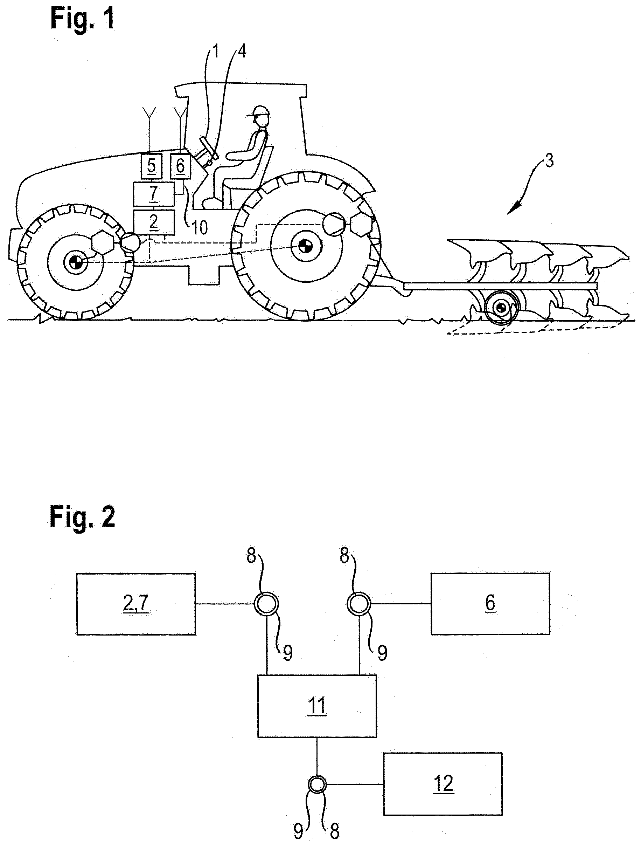

Fig. 1 zeigt einen Traktor als Beispiel einer landwirtschaftlichen Maschine, an dem die Erfindung anwendbar ist, wobei sich versteht, dass die Erfindung ohne weiteres auf beliebige andere Typen von landwirtschaftlichen Maschinen anwendbar ist. Lenkung und Motor des Traktors sind wahlweise vom Fahrer über ein Lenkrad 1 und nicht gezeigte Fahrpedale oder in einem autonomen Betriebsmodus von einer Navigationseinheit 2 steuerbar. Auch der Betriebszustand eines Arbeitswerkzeugs 3 (hier z.B. in oder außer Bodeneingriff) kann wahlweise der Kontrolle des Fahrers oder der Navigationseinheit 2 unterstehen. Zum Umschalten in den autonomen Betriebsmodus ist ein dediziertes Bedienelement 4 in der Fahrerkabine vorgesehen; ein Umschalten in den fahrergesteuerten Modus kann durch Betätigen des Lenkrades 1 oder eines der Fahrpedale herbeigeführt werden.

Um im autonomen Betriebsmodus den Traktor über ein zu bearbeitendes Feld steuern zu können, benötigt die Navigationseinheit 2 fortlaufend genaue Daten über die Position des Traktors. Eine nicht erfindungsgemäße Positionsbestimmungsvorrichtung zum Liefern dieser Daten umfasst einen an sich bekannten Empfänger 5 für Satellitennavigationssignale, z.B. von GPS- oder Galileo-Satelliten, einen Mobilfunkempfänger 6 zum Empfangen eines RTK-Korrektursignals über ein herkömmliches zellulares Mobilfunknetz sowie eine Auswerteeinheit 7 zum Errechnen der Position des Traktors anhand der vom Empfänger 5 bereitgestellten Satellitennavigationssignale und eines Datenstroms, den der Mobilfunkempfänger 6 aus der RTK-Korrekturinformation ableitet.

Techniken, die anhand dieser Daten eine Positionsberechnung mit einer Genauigkeit in der Größenordnung von wenigen cm ermöglichen, sind bekannt und brauchen an dieser Stelle nicht beschrieben zu werden.

Der Mobilfunkempfänger 6 und die Auswerteeinheit 7 sind als getrennte Baugruppen realisiert, die untereinander durch wenigstens ein Paar Steckverbinder lösbar verbunden sind, insbesondere über ein Kabel 10 mit Steckverbindern an beiden Enden, die ihrerseits mit Steckverbindern der Baugruppen verbunden sind. Der Empfänger 5 für die Satellitensignale kann mit der Auswerteeinheit 7 in einer gleichen Baugruppe zusammengefasst sein.

Um diese Positionsbestimmungsvorrichtung erfindungsgemäß aufzurüsten, genügt es, die Verbindung zwischen den Steckverbindern zu lösen und zwischen beide wie in Fig. 2 gezeigt eine Steuereinheit 11 einzufügen, die in der Lage ist, die Auswerteeinheit wahlweise mit dem ursprünglichen Mobilfunkempfänger 6 oder einem ebenfalls nachgerüsteten Mobilfunkempfänger 12 zu verbinden.

Jeder der Mobilfunkempfänger 6, 12 verfügt über eine eigene SIM-Karte 13, 14. Dies ermöglicht es beiden Mobilfunkempfängern 6, 12, jeweils unabhängig voneinander und gleichzeitig eine Datenverbindung aufrechtzuerhalten, auf der sie RTK-Korrekturinformation beziehen, und daraus einen Ausgangs-RTK-Datenstrom für die Auswerteeinheit 7 bereitzustellen. Die Steuereinheit 11 empfängt beide Ausgangs-RTK-Datenströme und leitet einen von beiden als Ausgangs-RTK-Datenstrom an die Auswerteeinheit 7 weiter. Die Auswerteeinheit 7 ist hat auf die Entscheidung, welcher der Ausgangs-RTK-Datenströme weitergeleitet wird, keinen direkten Einfluss, d.h. die Steuereinheit 11 benötigt keine Ausgabe der Auswerteeinheit 7, um diese Entscheidung zu treffen.

Einer Ausgestaltung zufolge stellt die Auswerteeinheit 7 an ihrem Steckverbinder einen Datenstrom bereit, der unter anderem das aktuelle Ergebnis der Positionsbestimmung durch die Auswerteeinheit 7 angibt. Dieser Datenstrom erreicht zwar über das Kabel 10 die Steuereinheit 11, wird aber von dieser nicht ausgewertet sondern ohne Veränderung, z.B. über eine zwischen den Steckverbindern 9 der Steuereinheit 11 durchgeschleifte Signalleitung, an beide Mobilfunkempfänger 6, 12 weitergeleitet, damit diese es für die Auswertung der RTK-Korrekturinformation nutzen können.

Einer Ausgestaltung zufolge empfängt die Steuereinheit 11 von den Mobilfunkempfängern 6, 12 außer den Ausgangs-RTK-Datenströmen keine weiteren Ausgaben. In diesem Fall ist die Steuereinheit 11 eingerichtet, um die Entscheidung anhand des Informationsgehalts der Ausgangs-RTK-Datenströme zu treffen. Ist dieser bei beiden identisch, dann besteht keine Notwendigkeit, den aktuell ausgewählten Ausgangs-RTK-Datenstrom zu ändern. Unterscheiden sich beide, so wird anhand einer Plausibilitätsprüfung entschieden, welcher Ausgangs-RTK-Datenstrom an die Auswerteeinheit 7 weitergegeben wird. Liefert zum Beispiel einer der Ausgangs-RTK-Datenströme einen gleichbleibenden Korrekturwert, während die Maschine in Bewegung ist, der andere aber nicht, dann daraus gefolgert werden, dass der Empfang des einen Stroms gestört ist, und der andere Ausgangs-RTK-Datenstrom wird an die Auswerteeinheit 7 weitergegeben.

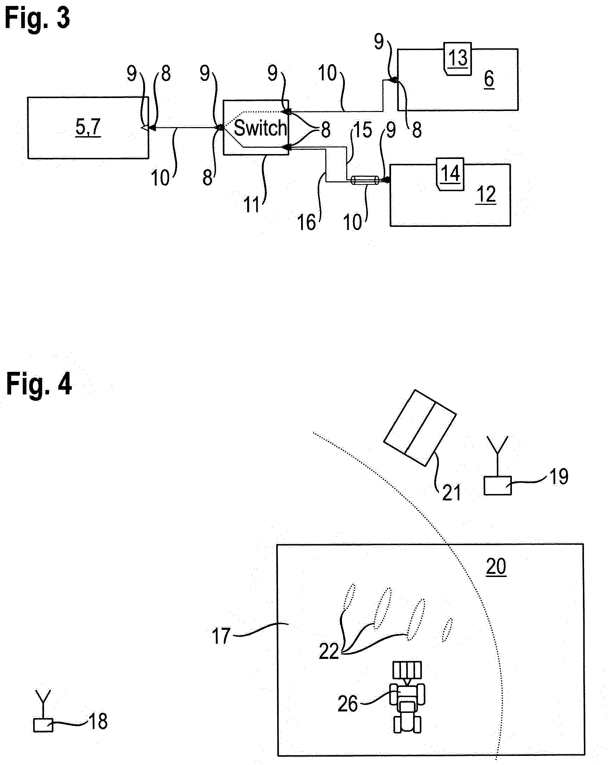

Einer in Fig. 3 gezeigten Ausgestaltung zufolge liefert der Mobilfunkempfänger 12 neben dem Ausgangs-RTK-Datenstrom auch eine Statusinformation, die angibt, ob die Qualität dieses Ausgangs-RTK-Datenstroms ausreichend ist oder nicht. So genügt als Steuereinheit 11 ein einfacher Schalter, der durch die Statusinformation gesteuert ist und, wenn die Qualität ausreichend ist, den Ausgangs-RTK-Datenstrom vom Mobilfunkempfänger 12 an die Auswerteeinheit 7 weitergibt und anderenfalls den Mobilfunkempfänger 6 mit der Auswerteeinheit 7 verbindet. Eine Leitung 15, die die Statusinformation vom Mobilfunkempfänger 12 an die Steuereinheit 11 überträgt, ist in Fig. 3 getrennt von einer den RTK-Datenstrom übertragenden Leitung 16 dargestellt; in der Praxis sind beide Leitungen 15, 16 in einem einzigen Kabel 10 zusammengefasst.

Die Steuereinheit 11 hat zwei identische eingangsseitige Steckverbinder 9 zum Verbinden mit den Mobilfunkempfängern 6 und 12. Beide Steckverbinder 9 sind ausgelegt, um die Statusinformation zu empfangen, so dass es für die Funktion der aufgerüsteten Positionsbestimmungsvorrichtung egal ist, mit welchem der beiden Steckverbinder 9 der Mobilfunkempfänger 12 verbunden ist.

Unter normalen Betriebsbedingungen, wenn beide Mobilfunkempfänger 6 und 12 einen brauchbaren Ausgangs-RTK-Datenstrom bereitstellen, kann die Steuereinheit 11 einen beliebigen der beiden Mobilfunkempfänger 6 und 12 mit der Auswerteeinheit 7 verbinden. Es kann vorgesehen sein, dass einer der beiden eingangsseiteigen Steckverbinder 9 der Steuereinheit priorisiert ist, und der dort anliegende RTK-Datenstrom immer zur Auswerteeinheit 7 durchgeschaltet ist, solange die zugehörige Statusinformation ausreichende Qualität anzeigt. Dies kann sinnvoll sein, wenn die technische Qualität der beiden Mobilfunkempfänger 6 und 12 unterschiedlich ist, z.B. wenn der nachgerüstete Mobilfunkempfänger 12 ein neueres Modell und dem älteren 6 technisch überlegen ist, oder wenn der ursprünglich vorhandene Mobilfunkempfänger 6 nicht eingerichtet ist, um die Statusinformation zu liefern. Alternativ kann vorgesehen sein, dass die Steuereinheit 11 immer dann von einem der Mobilfunkempfänger 6, 12 auf den anderen umschaltet, wenn die Statusinformation des einen Mobilfunkempfängers beginnt, eine unzureichende Qualität von dessen Ausgangs-RTK-Datenstroms anzuzeigen. So kann die Häufigkeit der Umschaltungen minimiert werden.

Die eingangsseitigen Steckverbinder 9 der Steuereinheit 11 und der Auswerteeinheit 7 sowie die ausgangsseitigen Steckverbinder 8 der Mobilfunkempfänger 6 und 12 und der Steuereinheit 11 sind untereinander baugleich. So können identische Kabel 10 zwischen allen Steckverbinderpaaren verwendet werden, und Fehler bei der Verkabelung sind ausgeschlossen, auch wenn ein in Elektronik unerfahrener Anwender die Aufrüstung selbst vornimmt.

Fig. 4 zeigt eine typische Anwendungssituation der Erfindung: Ein Feld 17, auf dem der Traktor 26 zum Einsatz kommen soll, ist von Mobilfunknetzen verschiedener Betreiber jeweils über eine Basisstation 18 bzw. eine Basisstation 19 abgedeckt. Beide Netze decken nur einen Teil des Feldes 17 ab, z.B. kann in einem Teil 20 die Empfangsqualität wegen zu großer Entfernung von der Basisstation 18 ungenügend sein, während die Abdeckung des anderen infolge von Mehrwegausbreitung, hier z.B. durch Reflexion an einem Gebäude 21 und Interferenz des Funksignals der Basisstation 19 Lücken 22 aufweist. Beide zusammen decken das Feld vollständig ab. Wenn also von den zwei SIM-Karten 13, 14 der beiden Mobilfunkempfänger 6, 12 die eine zum Netz der Basisstation 18 und die andere zum Netz der Basisstation 19 gehört, steht an jedem Punkt des Feldes 17 ein brauchbarer RTK-Datenstrom zur Verfügung, und da die Steuereinheit 11 verzögerungsfrei von einem Mobilfunkempfänger 6 oder 12 auf den anderen umschalten kann, ohne vorher ein Einbuchen des anderen Mobilfunkempfängers in sein Netz abwarten zu müssen, kann der Wechsel von einem RTK-Datenstrom zum anderen unterbrechungsfrei ablaufen, so dass eine hochgenaue Positionsbestimmung unter Nutzung des RTK-Datenstroms ununterbrochen möglich ist.

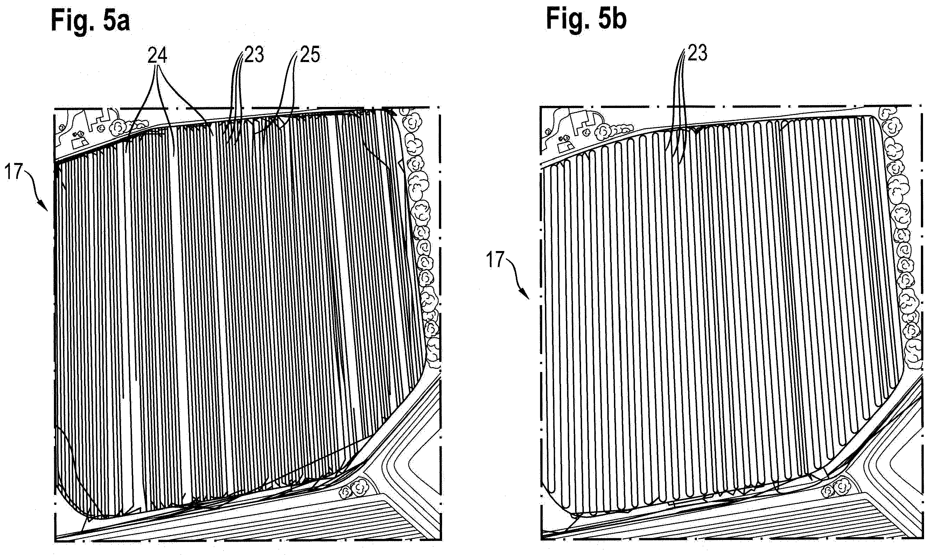

Fig. 5 zeigt das Ergebnis eines Praxisversuchs, bei dem ein gleiches Feld 17 einmal (Fig. 4a) mit einer herkömmlichen Positionsbestimmungsvorrichtung und ein anderes Mal mit der erfindungsgemäß aufgerüsteten Positionsbestimmungsvorrichtung bearbeitet wurde. Linien 23 auf dem Feld bezeichnen den von dem Traktor auf dem Feld autonom gefahrenen Weg. Es ist deutlich sichtbar, dass die Linien nicht parallel und gleichmäßig verteilt sind. Stattdessen sind Lücken 24, in denen aufgrund eines zeitweiligen Ausfalls des RTK-Datenstroms das autonome Fahren unterbrochen und der Traktor manuell gesteuert werden musste, sowie Abweichungen 25vom parallelen Verlauf deutlich sichtbar. Nach Aufrüstung der Positionsbestimmungsvorrichtung wie oben beschrieben wurde der Versuch wiederholt, und es konnte, wie an dem gleichmäßigen Muster von parallelen Linien erkennbar, das gesamte Feld erfolgreich autonom bearbeitet werden.

Natürlich kann die Positionsbestimmungsvorrichtung vom Hersteller des Traktors oder anderen landwirtschaftlichen Fahrzeugs auch bereits bei dessen Montage komplett eingebaut werden. Dies ist allerdings nur für einen kleinen Kreis von Anwendern interessant, die bereits bei Anschaffung des Fahrzeugs wissen, dass es auf einer Fläche mit schlechter Mobilfunkabdeckung zum Einsatz kommen wird. In der Praxis häufiger ist der Fall, dass der Anwender erst in der Anwendung erkennt, dass die Mobilfunkabdeckung auf einer zu bearbeitenden Fläche schlecht ist, oder sich die Abdeckung im Laufe der Zeit, z.B. durch Vegetationswachstum oder Baumaßnahmen, verschlechtert. Dem kann durch den erfindungsgemäßen mehrteiligen Aufbau der Positionsbestimmungsvorrichtung Rechnung getragen werden, da der Anwender sich bei Anschaffung des Fahrzeugs darauf beschränken kann, diejenigen Komponenten einbauen zu lassen, die für autonomen Betrieb auch bei guter Netzabdeckung unverzichtbar sind, und so die Kosten niedrig zu halten, ohne dadurch in dem Fall, dass sich später Bedarf nach den Nachrüstkomponenten herausstellt, Mehrkosten für einen Austausch von Komponenten oder einen Werkstatteingriff zu riskieren.

### Bezugszeichen

- 1: Lenkrad
- 2: Navigationseinheit
- 3: Arbeitswerkzeug
- 4: Bedienelement
- 5: Empfänger
- 6: Mobilfunkempfänger
- 7: Auswerteeinheit
- 8: Steckverbinder
- 9: Steckverbinder
- 10: Kabel
- 11: Steuereinheit
- 12: Mobilfunkempfänger
- 13: SIM-Karte
- 14: SIM-Karte
- 15: Leitung
- 16: Leitung
- 17: Feld
- 18: Basisstation
- 19: Basisstation
- 20: Teil (des Feldes 17)
- 21: Gebäude
- 22: Lücke
- 23: Linie
- 24: Lücke
- 25: Abweichung
- 26: Traktor

## Patentansprüche

1. Landwirtschaftliche Maschine mit einer Positionsbestimmungsvorrichtung, die einen ersten Mobilfunkempfänger (6) zum Liefern eines ersten Ausgangsdatenstroms und eine Auswerteeinheit (7) zum Errechnen der Position der Maschine anhand eines Eingangsdatenstroms umfasst, **dadurch gekennzeichnet, dass** die Positionsbestimmungsvorrichtung wenigstens einen zweiten Mobilfunkempfänger (12) zum Liefern eines zweiten Ausgangsdatenstroms und eine Steuereinheit (11) umfasst, die eingerichtet ist, um anhand von Ausgaben der Mobilfunkempfänger (6, 12) einen der Ausgangsdatenströme auszuwählen und als Eingangsdatenstrom an die Auswerteeinheit (7) weiterzugeben.

2. Landwirtschaftliche Maschine nach Anspruch 1, **dadurch gekennzeichnet, dass** die Positionsbestimmungsvorrichtung ferner einen Empfänger (5) für Satellitennavigationssignale umfasst, dass der erste Mobilfunkempfänger (6) eingerichtet ist, eine Korrekturinformation über ein zellulares Mobilfunknetz zu empfangen und den ersten Ausgangsdatenstrom aus der Korrekturinformation abzuleiten, und dass der zweite Mobilfunkempfänger (12) eingerichtet ist, die Korrekturinformation über ein zellulares Mobilfunknetz zu empfangen und den zweiten Ausgangsdatenstroms aus der Korrekturinformation abzuleiten.

3. Landwirtschaftliche Maschine nach Anspruch 1 oder 2, **dadurch gekennzeichnet, dass** die Ausgaben ein vom zweiten Mobilfunkempfänger (12) ausgegebenes Steuersignal umfassen und die Steuereinheit (11) eingerichtet ist, den weitergegebenen Ausgangsdatenstrom anhand des Steuersignals auszuwählen.

4. Landwirtschaftliche Maschine nach Anspruch 1 oder 2, **dadurch gekennzeichnet, dass** die Ausgaben die Ausgangsdatenströme umfassen und die Steuereinheit (11) eingerichtet ist, die Qualität oder das Vorliegen eines der Ausgangsdatenströme zu beurteilen und den anderen Ausgangsdatenstrom als Eingangsdatenstrom an die Auswerteeinheit (7) weiterzugeben, wenn der eine Ausgangsdatenstrom als nicht vorliegend oder als von unzureichender Qualität beurteilt wird.

5. Landwirtschaftliche Maschine nach einem der vorhergehenden Ansprüche, **dadurch gekennzeichnet, dass** die Mobilfunkempfänger (6, 12) mit jeweils einer eigenen SIM (13, 14) betreibbar sind.

6. Landwirtschaftliche Maschine nach einem der vorhergehenden Ansprüche, **dadurch gekennzeichnet, dass** die Steuereinheit (11) eine Baueinheit mit wenigstens drei Steckverbindern (8, 9, 9) ist, wobei wenigstens zwei baugleiche Steckverbinder (9, 9) zum Anschließen der wenigstens zwei Mobilfunkempfänger (6, 12) vorgesehen sind und ein weiterer, zu den wenigstens zwei Steckverbindern (9, 9) komplementärer Steckverbinder (8) zum Anschließen an die Auswertungseinheit (7) vorgesehen ist.

7. Landwirtschaftliche Maschine nach nach einem der vorhergehenden Ansprüche, **dadurch gekennzeichnet, dass** die Korrekturinformation ein RTK-Signal ist.

8. Nachrüstsatz für eine Positionsbestimmungsvorrichtung einer landwirtschaftlichen Maschine, wobei die Positionsbestimmungsvorrichtung einen Empfänger (5) für Satellitennavigationssignale, einen ersten Mobilfunkempfänger (6) zum Empfangen einer Korrekturinformation über ein erstes zellulares Mobilfunknetz und Ableiten eines ersten Ausgangsdatenstroms aus der Korrekturinformation und eine Auswerteeinheit (7) zum Errechnen der Position der Maschine anhand der Satellitennavigationssignale und eines Eingangsdatenstroms umfasst,
wobei der Nachrüstsatz wenigstens einen zweiten Mobilfunkempfänger (12) zum Empfangen der Korrekturinformation über ein zweites zellulares Mobilfunknetz und Ableiten eines zweiten Ausgangsdatenstroms aus der Korrekturinformation und eine Steuereinheit (11 umfasst, die eingerichtet ist, um einen der Ausgangsdatenströme auszuwählen und als Eingangsdatenstrom an die Auswerteeinheit (7) weiterzugeben.

9. Verfahren zur Positionsbestimmung mit den Schritten:
- Verbinden eines ersten Mobilfunkempfängers (6, 12) mit einem zellularen Mobilfunknetz, um eine Korrekturinformation über das zellulare Mobilfunknetz zu empfangen und daraus einen ersten Ausgangsdatenstrom zu erzeugen;
- Verbinden eines zweiten Mobilfunkempfängers (12, 6) mit einem zellularen Mobilfunknetz, um eine Korrekturinformation über das zellulare Mobilfunknetz zu empfangen und daraus einen zweiten Ausgangsdatenstrom zu erzeugen;
- Empfangen von Satellitennavigationssignalen,
- Auswählen eines der Ausgangsdatenströme anhand wenigstens einer Ausgabe wenigstens eines der Mobilfunkempfänger (12) und
- Errechnen der Position anhand des ausgewählten Ausgangsdatenstroms und der empfangenen Satellitennavigationssignale.

10. Verfahren nach Anspruch 9, bei dem jeder Mobilfunkempfänger (6, 12) mit einer eigenen SIM (13, 14) betrieben wird, mit dem vorbereitenden Schritt des Auswählens der SIMs (13, 14) so, dass sie dem ersten Mobilfunkempfänger (6) Zugang zu einem anderen Mobilfunknetz gewähren als dem zweiten Mobilfunkempfänger (12).
